# EUROPEAN PATENT SPECIFICATION

(11) **EP 0 423 672 B1**
(45) Date of publication and mention of the grant of the patent: **28.02.1996**
(21) Application number: 90119697.2
(22) Date of filing: 15.10.1990
(51) Int. Cl.: G11B 7/085, G11B 19/10, G06K 13/067

(54) **Optical card processing apparatus**
Verarbeitungsgerät für optische Karten
Appareil pour le traitement de cartes optiques

(30) Priority: 14.10.1989 JP 267042/89
(43) Date of publication of application: 24.04.1991
(73) Proprietor: OMRON CORPORATION, Kyoto 616 (JP)
(72) Inventor: Tsutsui, Keiichi, c/o Intellec. Property Center, Nagaokakyo-shi, Kyoto 617 (JP)
(74) Representative: WILHELMS, KILIAN & PARTNER Patentanwälte

(56) References cited:
- EP-A- 0 111 010
- EP-A- 0 300 481
- US-A- 4 700 056
- US-A- 4 751 394
- PATENT ABSTRACTS OF JAPAN vol. 7, no. 224 (P-227)(1369) 5 October 1983 & JP-A-58 114354
- PATENT ABSTRACTS OF JAPAN vol. 10, no. 237 (P-487)(2293) 15 August 1986, & JP-A- 61 68735
- PATENT ABSTRACTS OF JAPAN vol. 8, no. 141 (P-283)(1578) 30 June 1984, & JP-A- 59 38931

## Description

### BACKGROUND OF THE INVENTION

### Field of the Invention

The present invention relates to an optical card processing apparatus for handling a card-shaped information recording medium on which information can be optically recorded (to be referred to as an optical card herebelow) so as to record information thereon and/or to reproduce (read) information written thereon, and in particular, to an optical card processing apparatus having a function to judge a setting state or a disposition state of an optical card therein for a determination of a normal state or an abnormal state. The invention also relates to a corresponding optical card state judging method.

### Description of Related Art

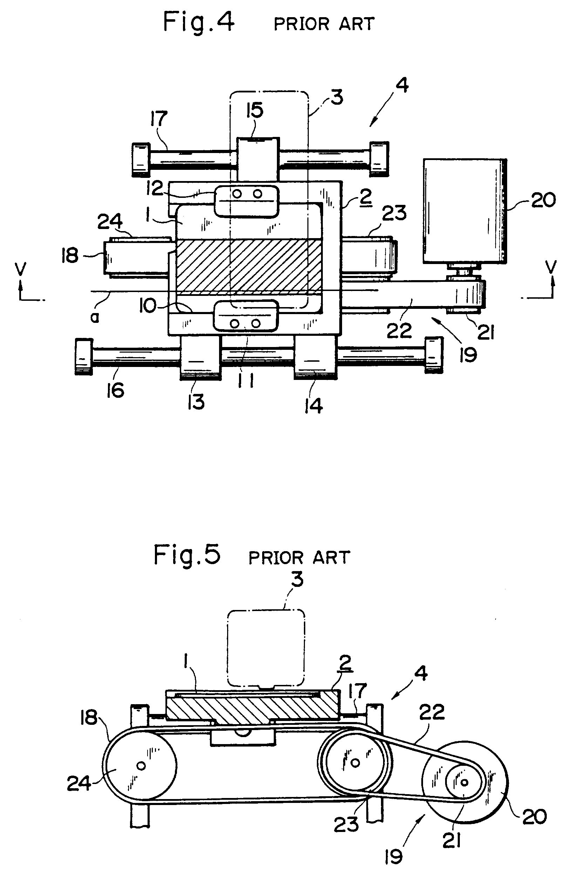

The conventional optical card processing apparatus of this kind comprises, as shown in Figs. 4 and 5, a shuttle 2 for supporting an optical card 1 inserted thereonto from a card insertion slit (not shown), an optical head 3 for irradiating a converged light onto the optical card 1 to record information thereon and/or to reproduce information recorded thereon (the intensity of the irradiated light varies between the recording and reproduci.ng operations), and a carrier or transporting mechanism 4 to reciprocating the shuttle 2. In this regard, although not shown, there is also included a mechanism for moving the optical head 3 in a direction orthogonal to the direction of the reciprocating movement of the shuttle 2.

The optical card 1 includes, as showin in a partially magnified diagram of Fig. 6a, an information recording section 6 (a hatched portion) having a surface on which a lot of information recording tracks 5 are disposed. The optical head 3 irradiates the converged lights onto these information recording tracks 5 for the information recording and reproducing operations. In this configuration, a reference numeral 7 indicates a track guide to be used by the optical head 3 for tracing the information recording tracks 5 and a numeral 8 denotes pits constituting a unit of information written on the tracks 5. The track guide 7 and the pits 8 are associated with a light reflection factor relatively lower than one developed in other portions than the track guide 7 and pits.

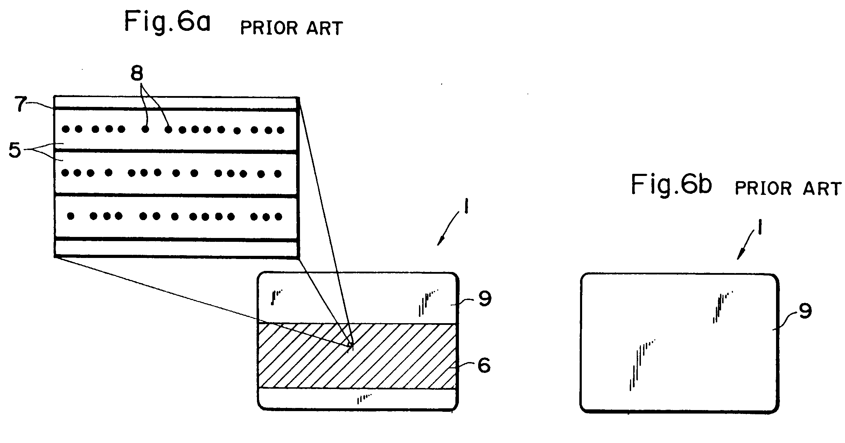

Fig. 6b shows a rear surface of the optical card 1. In the rear and front surfaces of the card 1, blank regions 9 may be adopted by the user to present a logotype or logo mark in conformity with the user's specification.

The shuttle 2 includes a depression 10 disposed on an upper surface thereof and clamp mechanisms 11 and 12. The optical card 1 is arranged in the shuttle 2 along a direction in which the card is fed so as to be fixed by means of the clamp mechanisms 11 and 12.

The transporting mechanism 4 includes guide shafts 16 and 17 for guiding and for supporting the shuttle 2 via bearings 13 to 15 disposed on the shuttle 2 to allow a reciprocating movement of the shuttle 2 and a driver unit 19 for reciprocating the shuttle 2 by means of a transporting belt 18. The driver unit 19 transfers power from a motor 20 via a pulley 21 on a driving side and a power transfer belt 22 to a driving pulley 23. The transporting belt 18 is reeved between the driving pulley 23 and a pulley 24 subordinate thereto so as to be linked with the shuttle 2. When the belt 18 starts running, the shuttle 2 is set to a reciprocating movement.

In the constitution above, when the optical card 1 is inserted from the card inlet, the card 1 is taken into the depressed portion 10 on the shuttle 2 to be kept therein. Next, the motor 20 drives the transporting belt 18 in a running state to move the shuttle 2. After the card 1 is aligned at a predetermined position, the optical head 3 is activated to emit a converged light onto the information recording section 6 of the optical card 1 for an information recording or reproducing operation.

The information recording and reproducing operations on the optical card 1 is accomplished on assumption that the card 1 is appropriately set onto the shuttle 2. Particularly, it is necessary that the optical card 1 is arranged correctly with respect to the front or rear side and to a forward or reverse direction of the card 1.

Conventionally, when confirming the presence or absence of the optical card 1 in the shuttle 2, there has been disposed a special device such as a micro switch in the processing apparatus, which however leads to the problem that the number of parts becomes greater and hence the cost as well as the size of the apparatus is increased.

To cope with the problem above, there has been described a method in JP-A-61-280073. In this method, based on the difference between the light reflection factors respectively of the information recording section 6 and the blank area 9 of the optical card 1, the intensity of the reproduced signal level is detected for each of the recording section 6 and the blank area 9, thereby judging the setting state of the optical card 1 in the apparatus.

However, depending on materials and colors of the information recording section 6 and the blank region 9 of the optical card 1, the difference between the light reflection factors respectively of the recording section 6 and the blank region 9 becomes to be quite small. In this situation, there rarely appears the difference between the magnitudes of the reproduced signals associated with the section 6 and the region 9. For example, the blank region 9 having white as its base color develops a reflection factor of at least 30%. On the other hand, there is obtained a reflection factor of about 40%±5% on the information recording section 6 having a recording layer which is produced by diffusing particles of silber in a surface of the information recording section 6 through an exposure and thermal treatment by use of a halogenated silber emulsion containing fine particles of silber. Consequently, there appears substantially the same reflection factor in the blank region 9 and the information recording section 6. If the surface of the optical card 1 becomes dirty, for example, particles of dirt are fixed thereonto, the setting or installing state of the optical card 1 cannot be easily determined by use of the magnitudes of the respective reproduced signal levels.

An optical card processing apparatus according to the preamble of claim 1 specificly designed for detecting inclination of the optical card is known from EP-A-0 300 481.

A disk reproducer adapted to detect an erroneous use of a disk containing signals recorded on its one surface only is known from Patent Abstracts of Japan, Vol. 7, No. 224 (P-227), (1369), October 05, 1983, & JP-A-58-114354.

### SUMMARY OF THE INVENTION

It is therefore an object of the present invention to provide a novel optical card processing apparatus in which the setting state of an optical card can be easily judged with a high accuracy even when the difference between the reflection factors respectively of the blank area and the information recording section thereof is quite small, thereby removing the difficulty above.

In accordance with the present invention, an optical card processing apparatus is as defined in claim 1. The optical card state judging method according to the invention is defined in claim 2.

When the optical card is appropriately set to the apparatus, the converged light is irradiated onto the information recording section. Consequently, when the objective is forcibly moved in a direction orthogonal to the information recording tracks, the converged light traverses the information recording tracks, thereby detecting a tracking error signal.

As contrast therewith, when the optical card is set to the apparatus in an inappropriate manner with respect to the front/rear side thereof or to the forward/reverse direction thereof, namely, when the card is set with a wrong side facing upward, for example, the converged light is not irradiated onto the information recording section. As a result, even if the objective is forcibly moved in a direction orthogonal to the direction of the information recording tracks, the converged light thus emitted does not intersect the information recording tracks and hence the system cannot detect any tracking error signals. In consequence, even for an optical card in which the reflection factors respectively of the blank region and the information recording section thereof are rarely different from each other, the setting state of the optical card can be easily determined with a high reliability.

### BRIEF DESCRIPTION OF THE DRAWINGS

These and other objects and advantages of the present invention will become apparent by reference to the following description and accompanying drawings wherein:
Fig. 1 is a block diagram schematically showing an electric configuration of an optical card processing apparatus in an embodiment in accordance with the present invention;
Fig. 2 is a signal timing chart showing the operation of the circuit of the card processing apparatus of Fig. 1;
Fig. 3 is a flowchart illustratively showing a control procedure of a controller of Fig. 1;
Fig. 4 is a plan view showing a mechanism of a conventional optical card processing apparatus;
Fig. 5 is a cross-sectional view of Fig. 4 along a line V-V, and
Figs. 6a and 6b are schematic diagrams respectively showing front and rear surfaces of an optical card.

### DESCRIPTION OF THE PREFERRED EMBODIMENTS

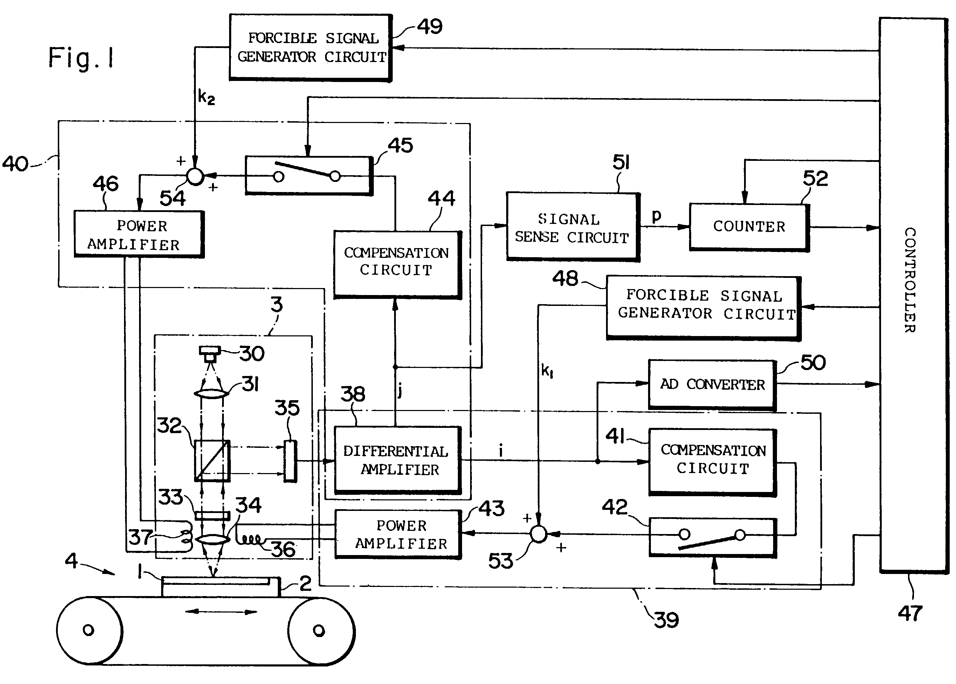

FIG. 1 shows an overall structure of an optical card processing apparatus in an embodiment according to the present invention. This constitution includes an optical card 1, a shuttle 2 for keeping the optical card 1, an optical head 3 disposed at a position over the shuttle 2, and a transporting mechanism 4 arranged at a position below the shuttle 2. Moreover, the mechanism shown in Figs. 4 and 5 can be directly applied also to this card processing apparatus.

The optical head 3 comprises a light source 30 including a laser diode, which emits a light beam to be collimated through a collimation lens 31 such that the resultant light is passed through a polarization beam splitter 32 so as to attain a p-polarized light. The light is fed through a quarter-wave plate 33 to be focused via an objective 34 onto the optical card 1. The light reflected from the optical card 1 returns through the light path in a reverse direction to pass the objective 34 and the quarter-wave plate 33. The p-polarized light is thus converted into an s-polarized light, which is hence reflected on the polarization beam splitter 32 so as to be received by a light receiver 35.

The objective 34 is arranged in such a manner that when a focusing coil 36 and a tracking coil 37 are powered, the objective 34 is respectively displaced to be orthogonal and parallel to a surface of the optical card 1. That is, the focusing coil 36 sets the objective 34 to a focusing direction orthogonal to the card surface, whereas the tracking coil 37 moves the objective 34 to a posture parallel to the card surface, namely, orthogonal to the information recording tracks 5 of the information recording section 6.

The light receiver 35 includes a pair of photodiodes (not shown), which are arranged at positions forming a symmetric pattern to be adjacent to each other. The reflection light from the optical card 1 is focused onto a location in the proximity of a boundary between the photodiodes. The photodiodes feed respective outputs to associated inputs of a differential amplifier 38, which obtains a difference between the two outputs so as to deliver a focusing error signal i and a tracking error signal j to a focusing servo loop 39 and a tacking servo loop 40, respectively.

The focusing servo loop 39 is a control loop for achieving a focusing servo operation in which the signal path is established through the differential amplifier 38, a compensation circuit 41, a switching circuit 42, an adder 53, a power ampiifier 43, and the focusing coil 36. The compensation circuit 41 determines, based on the focusing error signal i, a correction voltage (or current) associated with the upward/downward movement of the objective 34. Thereafter, the power ampiifier 43 amplifies the power to be supplied to the focusing coil 36.

The tracking servo loop 40 is a control loop for accomplishing a tracking servo operation and includes a signal route constituted with the differential amplifier 38, a compensation circuit 44, a switching circuit 45, an adder 54, a power amplifier 46, and the tracking coil 37. The compensation circuit 44 decides, depending on the tracking error signal j, a correction voltage (or current) related to the parallel movement of the objective 34 such that the power amplifier 46 then amplifies the power to be supplied to the tracking coil 37.

The power amplifiers 43 and 46 are respectively connected via the adders 53 and 54 to forcible signal generator circuits 48 and 49, which operate under supervision of the controller 47.

The forcible signal generator 48 delivers a forced movement signal k₁ to the focusing coil 36 to forcibly move the objective 34 toward the focusing direction. The forcible signal generator 49 on the other hand supplies a forced movement signal k₂ to the tracking coil 37 to forcibly move the objective 34 in a direction orthogonal to the information recording tracks 5.

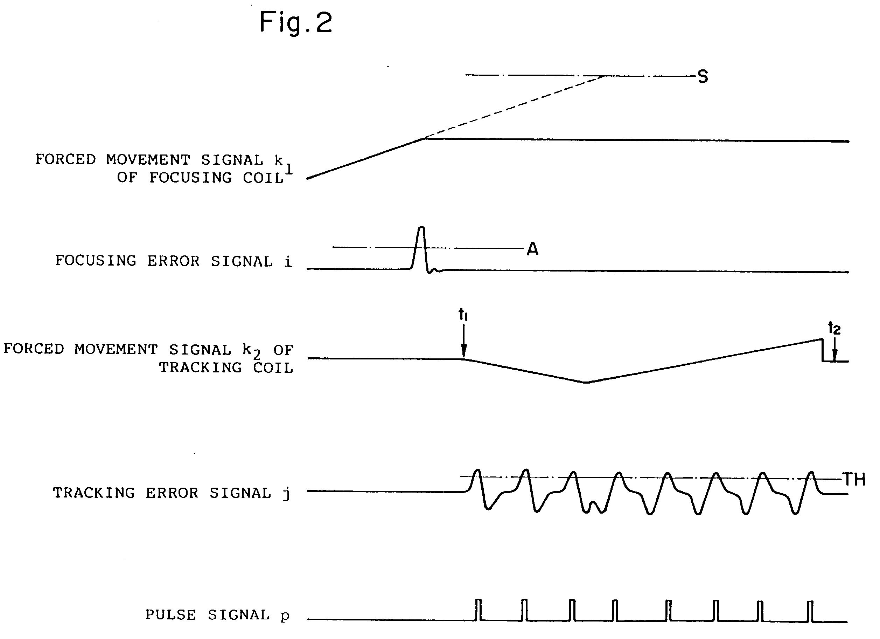

Fig. 2 shows operation timings of the forced movement signal k₁ to be fed to the focusing coil 36 and the focusing error signal i to be delivered thereto during the forced movemtent.

In the configuration of Fig. 1, a circuit including an analog-to-digital (A/D) converter 50 is disposed to sense the focusing error signal i during the forced movement. The A/D converter 50 converts the focusing error signal i into a digital signal. Resultantly, the controller 47 judges to determine an occurrence of the focusing error signal i and a condition where the signal level of the digital signal exceeds a discrimination level A (shown in Fig. 2).

Fig. 2 further shows the forced movement signal k₂ to be fed to the tracking coil 37 and the tracking error signal j to be developed in the forced movement.

In the constitution of Fig. 1, a circuit including the signal sense circuit 51 and a counter 52 is disposed to determine whether or not the tracking error signal j has been produced in the forced movement. The signal sense circuit 51 discriminates the value of the tracking error signal j with use of a threshold value TH for a binarization of the signal, thereby producing a pulse signal p. The number of pulse signals p is counted during a period of time from a point of time t₁ when the forced movement signal k₂ is generated to a point of time t₂ when the signal k₂ is stopped. The controller 47 compares the obtained count value with a reference value to determine the presence or absence of the tracking error signal j.

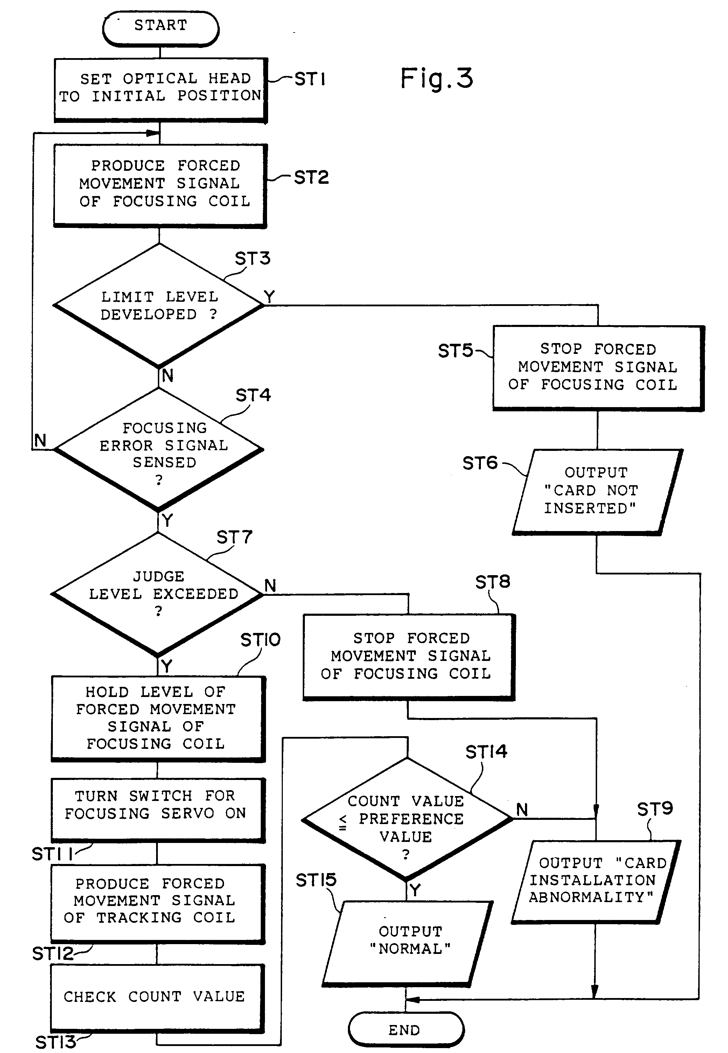

Fig. 3 shows a control procedure employed by the controller 47 to judge the setting or installation state of the optical card 1 on the shuttle 2.

When the optical card 1 is inserted through the card inlet to be retained on the shuttle 2, a step 1 (to be denoted as ST1 in the flowchart of Fig. 3) moves the optical head 3 by means of the head transporting mechanism to an initial position thereof.

In general, the information recording section 6 is disposed in a portion of the front surface of the optical card 1, the portion being shifted from the center portion toward a side thereof as shown in Fig. 6a. Let us assume here that an end position of the side associated with the information recording section 6 is selected as the initial position a as shown in Fig. 4. With this provision, if the optical card 1 is inserted in a wrong orientation with respect to the predetermined insertion direction thereof, namely, if the tail end of the card 1 is first inserted in the inlet slit, the optical head 3 is positioned over the blank region 9 of the card 1. This enables the apparatus to judge the associated card installation state, which will be described later in detail.

In a step 2, the controller 47 initiates the forcible signal generator 48 to produce a forced movement signal k₁ so as to energize the focusing coil 36, thereby forcibly moving the objective 34 to the focusing direction. A focusing error signal i created in the forced movement is converted through the A/D converter 50 into a digital signal to be fed to the controller 47. In this operation, the switching circuit 42 is kept retained in the off state.

A step 3 determines whether or not the magnitude of the forced movement signal k₁ reaches a predetermined limit level S. A step 4 then judges to decide whether or not a focusing error signal i has been sensed.

In a case where the focusing error signal i is not sensed even when the objective 34 is moved in the overall movable range thereof with the forced movement signal k₁ increased to the limit level S, the system assumes that the optical card 1 is missing in the shuttle 2. Control is then passed from the step 3 to a step 5, which then turns the forced movement signal k₁ off and outputs a message "Card not inserted" (step 6).

If the focusing error signal i is sensed in the forced movement, the judgement of the step 4 results in "Yes" to pass control to a step 7. In this step 7, the controller 47 determines whether or not the signai level of the focusing error signal i has reached the judge level A.

If the signal level does not exceed the judge level A, the check of the step 7 results in "No". Consequently, the apparatus assumes that the converged light is irradiated onto the blank region 9 having a reflection factor less than a reflection factor of the information recording section 6, namely, the optical card 1 is installed on the shuttle 2 upside down or with a wrong orientation with resepct to the insertion direction thereof. As a result, the system turns the forced movement signal k₁ off and then outputs a message "Card installation abnormality" (steps 8 and 9).

If the step 7 judges that the signal level has exceeded the judge level A, the controller 47 issues a focusing servo instruction to hold the current signal level of the forced movement signal k₁ and then turns the switching circuit 42 associated with the focusing servo loop 39 on. Steps 10 and 11 are the operation procedure in which the focusing servo is started.

Subsequently, while the focusing servo is in the operating state, the controller 47 causes the forcible signal generating circuit 49 to produce the forced movement signal k₂ for a predetermined period of time. The tracking coil 37 is hence powered to forcibly move the objective 34 in a direction orthogonal to the information recording tracks 5 of the optical card 1 (setp 12). A tracking error signal j generated in the forced movement is compared with a threshold value TH in the signal sense circuit 51 for a binarization thereof. The resultant pulse signal p is counted by the counter 52 during a period of time from the point of time t₁ when the forced movement signal k₂ is generated to the point of time t₂ when the signal k₂ is stopped (step 13). In this operation, the switch 45 is kept remained in the off state. The counted value is received by the controller 47, which in turn compares the count value with a reference value. If the count value is equal to or more than the reference value, an occurrence of the tracking error signal j is assumed and hence a message "Normal" is produced (step 15). If the count value is less than the reference value, it is assumed that the optical card 1 has been installed on the shuttle 2 upside down or with an inappropriate orientation in the insertion direction thereof. Consequently, the forced movement signal k₂ is stopped and a message "Card installation abnormality" is outputted (step 9).

In the case where the optical card 1 is installed on the shuttle 2 in an appropriate fashion, the controller 47 turns the switching circuit 45 of the tracking servo loop 40 on to activate the tracking servo into the operating state. Thereafter, control is passed to an operation to record information on the optical card 1 or to reproduce information recorded on the optical card 1 in advance.

## Claims

1. An optical card processing apparatus having:
an optical head (3) including an objective (34) for irradiating converged light onto an optical card (1) supported in the apparatus and for receiving light reflected from the optical card to record information on the optical card or to reproduce information recorded thereon;
focusing servo means (39) for performing focusing control of the irradiated light on the basis of a focusing error signal (i) produced from the received light; and
tracking servo means (40) for performing a tracking control function for allowing the converged light to follow recording tracks (5) on the optical card on the basis of a tracking error signal (j) produced from the received light,
characterized in that said apparatus further comprises:
lens moving means (49) for forcibly moving the objective, while the focusing servo means is in an operating state, in a direction orthogonal to a direction of information recording tracks of the optical card; and
judging means (47, 51, 52) for sensing, in a forced movement of the objective, presence or absence of the trakking error signal to thereby judge the setting state of the optical card.

2. An optical card state judging method of judging the setting state of an optical card during an operation in which focusing control is conducted in an optical card processing apparatus having an optical head (3) including an objective (34) for irradiating converged light onto an optical card (1) supported in the apparatus and for receiving light reflected from the optical card to record information on the optical card or to reproduce information recorded thereon, focusing servo means (39) for performing a focusing control of the irradiated light on the basis of a focusing error signal (i) produced from the received light, and trakking servo means (40) for performing a tracking control for allowing the converged light to follow recording tracks (5) on the optical card on the basis of a tracking error signal (j) produced from the received light, characterized in that said method comprises the steps of:
forcibly moving (ST12) an irradiation position on the optical card on which the converged light emitted from the optical head is irradiated in a direction orthogonal to a direction of the tracks of the optical card;
judging (ST13) whether the tracking error signal is present or absent in a process of transition of the irradiation position of the emission light; and
determining (ST14, ST15) the setting state of the optical card based on a result of the judgement.

3. A method in accordance with claim 2, characterized in that said judging step includes:
a step (ST13) of discriminating the tracking error signal depending on a predetermined level to produce pulse signals; and
a step (ST13) of counting a number of the pulse signal thus attained through the discrimination, and
said determining step comprises:
a step (ST14, ST15) of judging the setting state of the optical card to be normal when the count value is equal to or greater than a predetermined value.

4. A method in accordance with claim 2, characterized by further including before the initiation of the focusing control the following steps of:
forcibly moving (ST2) a focal position on the optical card on which the light emitted from the optical head is irradiated in a direction orthogonal to the plane of the optical card; and
judging (ST3, ST4, ST6, ST7, ST9) the setting state of the optical card depending on the level of the focusing error signal developed in association with the displacement of the focal position.

## Patentansprüche

1. Vorrichtung zur Vearbeitung einer optischen Karte mit
einem optischen Kopf (3) mit einem Objektiv (34) zum Einstrahlen von konvergentgemachtem Licht auf eine in der Vorrichtung gehalterte optische Karte (1) und zum Empfangen von an der optischen Karte reflektiertem Licht zur Aufzeichnung von Information auf der optischen Karte und zur Widergabe von darauf aufgezeichneter Information,
Fokussierungsservomitteln (39) zur Durchführung einer Fokussierungsregelung des eingestrahlten Lichts auf der Grundlage eines anhand des empfangenen Lichts erzeugten Fokussierungsfehlersignals (i), und
Spurservomitteln (40) zur Durchführung einer Spurregelungsfunktion, durch die das konvergentgemachte Licht Aufzeichnungsspuren (5) auf der optischen Karte auf der Grundlage eines anhand des empfangenen Lichts erzeugten Spurfehlersignals (j) folgen kann,
dadurch gekennzeichnet, daß die Vorrichtung ferner
Linsenbewegungsmittel (49) zur Zwangsbewegung des Objektivs, während die Fokussierungsservormittel arbeiten, in einer Richtung senkrecht zu einer Richtung von Informationsaufzeichnungsspuren auf der optischen Karte, und
Beurteilungsmittel (47, 51, 52) zum Abfühlen, in einer Zwangsbewegung des Objektivs, des Vorhandenseins oder Fehlens des Spurfehlersignals, um damit den Einrichtzustand der optischen Karte zu beurteilen.

2. Verfahren zur Beurteilung des Einrichtszustands einer optischen Karte während eines Vorgangs, bei welchem eine Fokussierungsregelung in einer Vorrichtung zur Verarbeitung einer optischer Karte, welche einen optischen Kopf (3) mit einem Objektiv (34) zum Einstrahlen von konvergentgemachtem Licht auf eine in der Vorrichtung gehalterte optische Karte (1) und zum Empfangen von an der optischen Karte reflektiertem Licht zur Aufzeichnung von Information auf der optischen Karte oder zur Widergabe von darauf aufgezeichneter optischer Information, Fokussierungsservomittel (39) zur Durchführung einer Fokussierungsregelung des eingestrahlten Lichts auf der Grundlage eines anhand des empfangenen Lichts erzeugten Fokussierungsfehlersignals (i) und Spurservomittel (40) zur Durchführung einer Spurregelung, durch welche das konvergentgemachte Licht Aufzeichnungsspuren (5) auf der optischen Karte auf der Grundlage eines anhand des empfangenen Lichts erzeugten Spurfehlersignals (j) folgen kann, enthält, dadurch gekennzeichnet, daß das Verfahren die Verfahrensschritte des
Zwangsbewegens (ST12) einer Einstrahlposition auf der optischen Karte, auf welche das vom optischen Kopf abgegebene, konvergentgemachte Licht eingestrahlt wird, in einer Richtung senkrecht zu einer Richtung der Spuren der optischen Karte,
Beurteilens (ST13), ob das Spurfehlersignal bei einem Vorgang des Übergangs der Einstrahlposition des abgegebenen Lichts vorhanden ist oder fehlt, und
Bestimmens (ST14, ST15) des Einrichtszustands der optischen Karte beruhend auf einem Ergebnis der Beurteilung aufweist.

3. Verfahren nach Anspruch 2, dadurch gekennzeichnet, daß der Beurteilungsschritt
einen Schritt (ST13) des Diskriminierens des Spurfehlersignals abhängig von einem bestimmten Wert zur Erzeugung von Impulssignalen, und
einen Schritt (ST13) des Zählens einer Anzahl von so über die Diskriminierung erhaltenen Impulssignalen enthält, und
der Bestimmungsschritt
einen Schritt (ST14, ST15) der Beurteilung des Einrichtszustands der optischen Karte als normal, wenn der Zählwert gleich oder größer als ein bestimmter Wert ist, enthält.

4. Verfahren nach Anspruch 2, dadurch gekennzeichnet, daß es vor der Ingangsetzung der Fokussierungssteuerung die folgenden Schritte enthält:
Zwangsbewegen (ST2) einer Fokussierungsstelle auf der optischen Karte, auf welche das vom optischen Kopf abgegebene Licht eingestrahlt wird, in einer Richtung senkrecht zur Ebene der optischen Karte, und
Beurteilen (ST3, ST4, ST6, ST7, ST9) des Einrichtszustands der optischen Karte, abhängig vom Wert des Fokussierungsfehlersignals, das in Zuordnung zur Versetzung der Fokussierungsstelle erzeugt wird.

## Revendications

1. Appareil de traitement de cartes optiques ayant:
une tête optique (3) incluant un objectif (34) pour émettre une lumière focalisée sur une carte optique (1) supportée dans l'appareil et pour recevoir une lumière réfléchie par la carte optique afin d'enregistrer des informations dans la carte optique ou de reproduire des informations qui y sont enregistrées;
des moyens d'asservissement de focalisation (39) pour effectuer une commande de focalisation de la lumière émise en fonction d'un signal d'erreur de focalisation (i) produit à partir de la lumière reçue; et
des moyens d'asservissement de poursuite de piste (40) pour effectuer une fonction de commande de poursuite de piste afin de permettre à la lumière focalisée de suivre des pistes d'enregistrement (5) sur la carte optique en fonction d'un signal d'erreur de poursuite de piste (j) produit à partir de la lumière reçue,
caractérisé en ce que ledit appareil comprend également:
des moyens de déplacement de lentille (49) pour déplacer l'objectif de manière forcée, tandis que les moyens d'asservissement de focalisation sont dans un état de fonctionnement, dans une direction orthogonale à une direction des pistes d'enregistrement d'informations de la carte optique; et
des moyens d'évaluation (47, 51, 52) pour détecter, lors d'un mouvement forcé de l'objectif, la présence ou l'absence du signal d'erreur de poursuite de piste afin d'évaluer grâce à cela de l'état de mise en place de la carte optique.

2. Procédé d'évaluation d'état de carte optique pour évaluer l'état de mise en place d'une carte optique pendant une opération dans laquelle une commande de focalisation est conduite dans un appareil de traitement de cartes optiques ayant une tête optique (3) incluant un objectif (34) pour émettre une lumière focalisée sur une carte optique (1) supportée dans l'appareil et pour recevoir une lumière réfléchie par la carte optique afin d'enregistrer des informations dans la carte optique ou de reproduire des informations qui y sont enregistrées, des moyens d'asservissement de focalisation (39) pour effectuer une commande de focalisation de la lumière émise en fonction d'un signal d'erreur de focalisation (i) produit à partir de la lumière reçue, et des moyens d'asservissement de poursuite de piste (40) pour effectuer une fonction de commande de poursuite de piste afin de permettre à la lumière focalisée de suivre des pistes d'enregistrement (5) sur la carte optique en fonction d'un signal d'erreur de poursuite de piste (j) produit à partir de la lumière reçue, caractérisé en ce que ledit procédé comprend les étapes consistant à:
déplacer de manière forcée (ST12) une position éclairée sur la carte optique sur laquelle la lumière focalisée émise par la tête optique l'est dans une direction orthogonale à une direction des pistes de la carte optique;
évaluer (ST13) si le signal d'erreur de poursuite de piste est présent ou absent lors d'une opération de transition de la position éclairée de la lumière d'émission; et
déterminer (ST14, ST15) l'état de mise en place de la carte optique en fonction d'un résultat de l'évaluation.

3. Procédé selon la revendication 2, caractérisé en ce que ladite étape d'évaluation inclut:
une étape (ST13) pour discriminer le signal d'erreur de poursuite de piste en fonction d'un niveau prédéterminé pour produire des signaux impulsionnels; et
une étape (ST13) pour compter un nombre atteint par le signal impulsionnel au moyen de la discrimination; et
ladite étape de détermination comprend:
une étape (ST14, ST15) pour évaluer l'état de mise en place de la carte optique comme étant un état normal lorsque la valeur comptée est égale ou supérieure à une valeur prédéterminée.

4. Procédé selon la revendication 2, caractérisé en ce qu'il inclut également, avant de démarrer la commande de focalisation, les étapes suivantes consistant à:
déplacer de manière forcée (ST2) une position focale sur la carte optique sur laquelle la lumière émise par la tête optique l'est dans une direction orthogonale au plan de la carte optique; et
évaluer (ST3, ST4, ST6, ST7, ST9) l'état de mise en place de la carte optique en fonction du niveau du signal d'erreur de focalisation produit en association au déplacement de la position focale.
